(19) Europäisches Patentamt
European Patent Office
Office européen des brevets

(11) **EP 2 189 750 B1**

(12) **FASCICULE DE BREVET EUROPEEN**

(45) Date de publication et mention
de la délivrance du brevet:
**07.11.2012 Bulletin 2012/45**

(51) Int Cl.:
*G01B 9/02* *(2006.01)*     *G01B 21/04* *(2006.01)*
*G06T 7/00* *(2006.01)*     *G01T 7/00* *(2006.01)*

(21) Numéro de dépôt: **09176629.5**

(22) Date de dépôt: **20.11.2009**

(54) **Procédé de calibration des gains interpixels d'un interféromètre**

Verfahren zur Kalibrierung der Verstärkungsfaktoren von Sensorpixeln eines Interferometers

Method for calibrating the gain factors of the sensor pixels in an interferometer

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **20.11.2008 FR 0857895**

(43) Date de publication de la demande:
**26.05.2010 Bulletin 2010/21**

(73) Titulaire: **CENTRE NATIONAL D'ETUDES SPATIALES**
**75001 Paris (FR)**

(72) Inventeurs:
• **Cansot, Elodie**
**31300 TOULOUSE (FR)**

• **Rosak, Alain**
**31500 TOULOUSE (FR)**

(74) Mandataire: **Callon de Lamarck, Jean-Robert et al**
**Cabinet Regimbeau**
**20 rue de Chazelles**
**75847 Paris cedex 17 (FR)**

(56) Documents cités:
**CN-A- 101 144 737**     **US-A- 5 675 513**
**US-A1- 2005 083 531**

• **J. SCHMIT, K. CREATH: "Extended averaging technique for derivation of error-compensating algorithms in phase-shifting interferometry" APPLIED OPTICS, vol. 34, no. 19, 1 juillet 1995 (1995-07-01), pages 3610-3619, XP002528143 doi: 10.1364/AO.34.003610**

**Description**

Le domaine de l'invention est celui de la calibration d'une matrice de détection pour la correction des variations de gain entre pixels.

L'invention concerne plus précisément l'interférométrie et un procédé qui permet de réduire les effets des erreurs causées par les variations de gain entre pixels de la matrice de détection dans le plan focal d'un interféromètre, erreurs qui viennent dégrader la précision des mesures réalisées par l'interféromètre.

En spectrométrie par Transformée de Fourier Statique, l'interféromètre élabore un interférogramme en créant un nombre fini de différences de marche optique réparties spatialement, et acquises par une matrice de détection. Ceci peut être réalisé à l'aide d'une multitude de miroirs en parallèle, appelés échelettes, et d'un système optique imageant ces échelettes sur une matrice. Ceci peut aussi être réalisé à l'aide d'un léger tilt entre les deux miroirs, la matrice effectuant alors l'acquisition des franges d'interférence créées par ce tilt entre les deux miroirs. Dans tous les cas, les gains de détection de la matrice de détection varient d'un pixel à l'autre, ce qui induit une distorsion lors de l'acquisition de chaque élément de l'interférogramme. On cherche donc à corriger l'écart de gain interpixels le plus précisément possible.

La méthode utilisée en imagerie classique pour calibrer les réponses interpixels d'une matrice de détection consiste à envoyer un signal uniforme (ou connu) sur tous les pixels de la matrice de détection. Cela peut se faire par exemple en éclairant l'instrument avec une sphère intégrante, qui fournit alors un éclairage uniforme.

La réponse des pixels du plan focal doit alors être uniforme. Si ce n'est pas le cas, on calcule pour chaque pixel le gain relatif nécessaire pour que chacun réponde de la même façon à cet éclairage uniforme.

Mais dans un interféromètre, le signal uniforme en entrée ressort modifié par les interférences. Le signal n'étant plus spatialement uniforme, il devient alors difficile de calibrer la matrice de détection en sortie de l'interféromètre. La méthode classique d'éclairage uniforme n'est donc pas satisfaisante dans le cadre de l'interférométrie.

Des autres méthodes de calibration connues sont décrites dans le brevet US 5,675,512 et dans la publication de J. Schmit et K. Creath "Extended averaging technique for derivation of error-compensating algorithms in phase-shifting interferometry"; Applied Optics, Vol.34, No.19, 1995.

Il existe donc un besoin pour une méthode de calibration des défauts de gain entre pixels d'une matrice de détection qui permette de corriger avec précision l'écart de gain interpixels dans le cadre d'une application interférométrique.

L'invention a pour objectif de répondre à ce besoin, et propose à cet effet un procédé de calibration d'une matrice de détection utilisée pour acquérir une image d'un interférogramme, comprenant les étapes selon lesquelles :

- on élabore un premier interférogramme et au moins deux interférogrammes décalés, le premier interférogramme étant élaboré en créant un nombre fini de différences de marche, et les interférogrammes décalés étant élaborés, pour chacun d'entre eux, par décalage de chacune des différences de marche du premier interférogramme, de telle sorte qu'on dispose pour chaque différence de marche d'au moins trois échantillons positionnés sur une portion de sinusoïde ;
- on détermine par interpolation pour chaque portion de sinusoïde une fonction coïncidant avec la portion de sinusoïde;
- on détermine un coefficient de calibration pour une différence de marche à partir de la fonction coïncidant avec la portion de sinusoïde correspondant à cette différence de marche.

Certains aspects préférés, mais non limitatifs, de ce procédé sont les suivants :

- le coefficient de calibration correspond à la moyenne de la fonction ;
- la fonction est sinusoïdale ;
- la fonction correspond au produit d'une fonction sinusoïdale et d'une fonction polynomiale ;
- les au moins trois échantillons correspondent à des différences de marche régulièrement espacées ;
- les au moins trois échantillons correspondent à des différences de marche espacées de manière à présenter un décalage total supérieur au quart d'une longueur d'onde du spectre en entrée de l'instrument élaborant les interférogrammes ;
- les au moins trois échantillons correspondent à des différences de marche espacées de manière à présenter un décalage total d'une longueur d'onde du spectre en entrée de l'instrument ;
- on élabore trois interférogrammes décalés ;
- on déplace un élément mobile de l'instrument de mesure pour élaborer un interférogramme décalé ;
- l'élément mobile est monté sur un mécanisme piézoélectrique ;
- le spectre en entrée de l'instrument élaborant les interférogrammes est à bande étroite.

Selon un exemple, on prévoit un instrument de mesure comprenant une matrice de détection pour acquérir une image d'un interférogramme calibrée conformément au procédé selon l'invention.

D'autres aspects, buts et avantages de la présente invention apparaîtront mieux à la lecture de la description détaillée suivante de formes de réalisation préférées de celle-ci, donnée à titre d'exemple non limitatif et faite en référence à la figure unique annexée représentant l'acquisition d'interférogrammes décalés.

L'invention concerne un procédé de calibration d'une matrice de détection utilisée pour acquérir une image d'un interférogramme, l'interférogramme étant élaboré par un instrument de mesure, par exemple par un interféromètre statique à échelettes.

Un exemple non limitatif d'application de l'invention est celui de l'interférométrie pour l'obtention d'un spectre dans l'infrarouge. Il s'agit par exemple de surveiller la pollution atmosphérique, notamment via l'obtention des profils de concentration pour l'ozone et le monoxyde de carbone. Deux bandes spectrales étroites sont alors particulièrement visées : la bande B1 = [1020cm$^{-1}$, 1080cm$^{-1}$] pour l'ozone et la bande B2 = [2132cm$^{-1}$, 2192cm$^{-1}$] pour le monoxyde de carbone.

D'une manière générale, et prenant l'exemple d'un interféromètre à échelettes, l'invention propose d'acquérir pour chaque échelette trois points (au moins) espacés à peu près régulièrement qui permettent de remonter à l'oscillation sinus, et donc de retrouver la valeur moyenne du signal. En effet, en faisant varier la différence de marche, on se déplace localement sur une portion de sinusoïde : le signal interférométrique varie effectivement de manière quasi-sinusoïdale lorsque l'on fait varier la différence de marche, et ce d'autant plus précisément que le spectre en entrée de l'instrument est à bande étroite. La période d'oscillation du signal interférométrique en fonction de la différence de marche est alors proche de la longueur d'onde centrale du spectre à bande étroite. En interpolant les points acquis par une fonction, on peut alors calculer un coefficient de calibration correspondant à l'échelette et pouvant être appliqué à la matrice de détection pour corriger des écarts de gain interpixels.

Ainsi le procédé selon l'invention permet de calculer un coefficient de calibration pour chaque échelette, ce qui permet de déterminer le coefficient de calibration de chaque superpixel de la matrice de détection.

On décrit ci-après de manière plus précise une mise en oeuvre possible du procédé selon l'invention.

Selon une première étape, on élabore un premier interférogramme et au moins deux interférogrammes décalés.

Le premier interférogramme est élaboré en créant un nombre fini de différences de marche (chaque différence de marche correspondant à une échelette de l'interféromètre), tandis que les interférogrammes décalés sont élaborés successivement (dans le temps), pour chacun d'entre eux, par décalage de chacune des différences de marche du premier interférogramme d'une distance connue.

Considérant pour chaque différence de marche au moins trois points, notamment au moins trois points relativement régulièrement espacés le long d'une période de l'oscillation interférométrique, on dispose alors pour chaque différence de marche d'au moins trois échantillons placés sur une portion de sinusoïde (car placés le long de l'oscillation sinusoïdale du signal interférométrique).

On retiendra qu'il n'y a pas de contrainte à espacer régulièrement les trois points ; ce qui importe étant que la distance entre les points soit connue. L'optimum consiste cependant en un espacement relativement régulier entre les points. Si deux points sont trop proches, ils risquent de ne plus apporter assez d'information pour résoudre le système d'équation dont il sera fait état par la suite.

De manière avantageuse, les trois échantillons correspondent à des différences de marche distantes d'une longueur d'onde du spectre en entrée de l'instrument (4.63 μm au total dans le cas de la bande B2, soit lambda/2 entre chaque point). Un décalage total de l'ordre de grandeur d'une période (donc de lambda), entre le premier et le dernier échantillon est préféré car cela donne une meilleure estimation des paramètres recherchés. Mais un tel décalage n'est pas indispensable. En revanche, un décalage total trop faible (inférieur à lambda/4 par exemple) peut conduire à une mauvaise estimation des gains interpixels. Un décalage supérieur à lambda doit s'apprécier, pour chaque valeur, à modulo lambda.

Selon une mise en oeuvre préférentielle de l'invention retenue dans la suite de la description, on élabore quatre interférogrammes décalés de manière à disposer de quatre échantillons d'interférogramme par échelette.

Un interférogramme I est défini de la manière suivante :

$$I(x) = \sum_{\sigma} B(\sigma).S_F(\sigma).(1 + \cos(2\pi\sigma.x)) ,$$

où

- B est le spectre d'entrée de l'instrument (il correspond par exemple au spectre atmosphérique mesuré par l'instrument), en W/m2/sr/cm$^{-1}$;
- $S_F$ est le filtre de l'instrument, dans les simulations il correspond au filtre étroit. Il définit le domaine spectral de mesure de l'instrument. C'est la présence de ce filtre étroit qui rend le signal sinusoïdal en fonction d'une variation de la différence de marche de l'ordre de grandeur de la longueur d'onde.

- x est la Différence de Marche (DDM), en cm ;
- $\sigma$ est le nombre d'onde en cm$^{-1}$.

On note $I_1$, $I_2$, $I_3$ et $I_4$ les 4 interférogrammes échantillonnés aux différences de marche suivantes conformément à la première étape du procédé selon l'invention.

- Pour $I_1$, x = $DDM_1$ = [-0.13cm : 80$\mu$m : +8.06 cm] ; les différences de marche sont échantillonnées au pas moyen de 80$\mu$m entre -0.13 cm et +8.06 cm.
- Pour $I_2$, x = $DDM_2$ = $DDM_1$+2.31 $\mu$m ;
- Pour $I_3$, x = $DDM_3$ = $DDM_1$+4.05 $\mu$m ;
- Pour $I_4$, x = $DDM_4$= $DDM_1$+6.36 $\mu$m.

On relèvera que ces valeurs ne sont pas parfaitement régulières dans cet exemple, du fait notamment d'autres contraintes instrumentales indépendantes (deux bandes spectrales sont acquises par l'instrument).

Pour chaque interférogramme, on dispose de 1024 valeurs. Notons i=1→1024.

On relèvera que du fait des erreurs de réalisation des échelettes, l'échantillonnage n'est pas parfaitement régulier. On considère typiquement une erreur de réalisation de type bruit blanc d'amplitude +/-5 $\mu$m.

A la suite de cette première étape, on dispose pour chaque différence de marche d'au moins trois échantillons placés sur une portion de sinusoïde. Reprenant l'exemple ici présenté, on considère ainsi pour chaque échelette i (correspondant à une différence de marche $x_i$) quatre points régulièrement espacés permettant l'acquisition de quatre échantillons $I_1(x_i)$, $I_2(x_i)$,$I_3(x_i)$, et $I_4(x_i)$ positionnés sur une portion de sinusoïde.

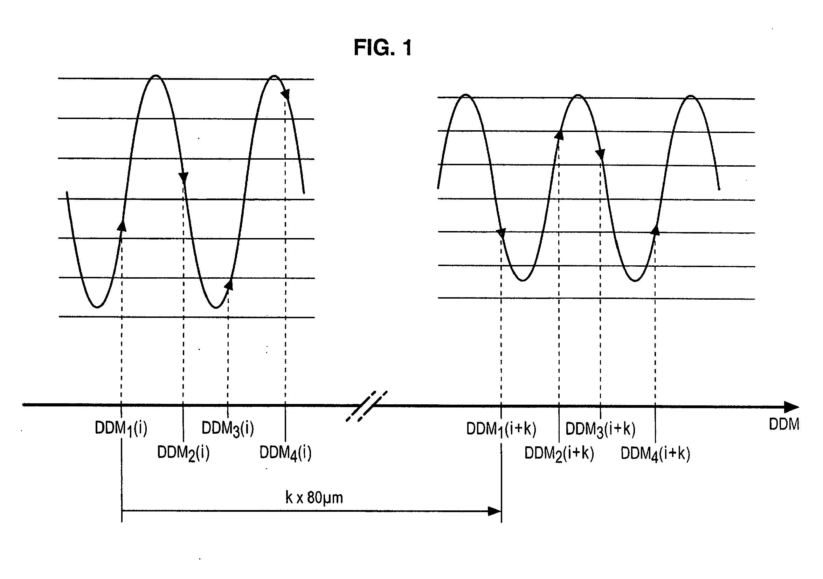

On a représenté sur la figure 1 l'acquisition de ces échantillons respectivement pour une échelette i et une échelette i+k.

Les échantillons correspondant à l'échelette i correspondent ainsi aux différences de marche $DDM_1$(i), $DDM_2$(i)= $DDM_1$(i)+2.31$\mu$m, $DDM_3$(i)= $DDM_2$(i)+1.74$\mu$m et $DDM_4$(i)= $DDM_3$(i)+2.31 $\mu$m.

Les échantillons correspondant à l'échelette i+k correspondent quant à eux aux différences de marche $DDM_1$ (i+k), $DDM_2$(i+k)= $DDM_1$(i+k)+1.74$\mu$m, $DDM_3$(i+k)= $DDM_2$(i+k)+2.31$\mu$m et $DDM_4$(i+k)= $DDM_3$(i+k)+2.31$\mu$m, avec $DDM_1$ (i+k)= $DDM_1$(i) +k.Te + alpha(k) où Te représente le pas moyen d'échantillonnage (80 $\mu$m dans l'exemple ici considéré) et alpha(k) l'erreur de régularité (connue) du pas d'échantillonnage.

Le signal interférométrique variant de manière quasi-sinusoïdale lorsque l'on fait varier la différence de marche, les quatre échantillons acquis pour une échelette sont positionnées sur une portion de sinusoïde comme cela est représenté sur la figure 1.

Comme on travaille sur une bande spectrale étroite centrée autour d'un nombre $\sigma_0$, on peut alors écrire le spectre vu par l'instrument sous la forme du produit de convolution entre une fonction étroite (qui est le spectre étroit décalé en 0) centrée en 0 et un dirac centré en $\sigma_0$ :

$$\begin{aligned} S(\sigma) &= B(\sigma).S_F(\sigma) \\ &= B(\sigma).* S_0(\sigma) \otimes \partial(\sigma - \sigma_0) \\ &= C(\sigma) \otimes \partial(\sigma - \sigma_0) \end{aligned}$$

Or l'interférogramme est la transformée de Fourier cosinus du spectre vu par l'instrument.

$$\begin{aligned} I(x) &= TF\cos\left[C(\sigma) \otimes \partial(\sigma - \sigma_0)\right] \\ &= TF\cos\left[C(\sigma)\right] * TF\cos(\partial(\sigma - \sigma_0)) \\ &= TF\cos\left[C(\sigma)\right] * \cos(2\pi\sigma_0.x) \end{aligned}$$

L'interférogramme est donc localement le produit d'une fonction cosinus de période $\sigma_0$ et d'une fonction qui est l'inverse d'une fonction étroite, donc une fonction variant lentement en fonction de x.

On peut donc interpoler localement l'interférogramme par une fonction sinus. On considère alors que la fonction lentement variable est constante sur cet intervalle.

Si on veut affiner l'évaluation (notamment dans le cas d'un spectre à bande plus large), on peut approximer la fonction lentement variable par un polynôme d'ordre adéquat (1 ou 2 en pratique suffit).

Nous détaillons ci-après le cas où l'on considère la fonction lentement variable comme constante.

Au cours d'une seconde étape, on détermine par interpolation les paramètres d'une fonction (typiquement une fonction sinusoïdale) coïncidant avec chaque portion de sinusoïde.

On définit par exemple la fonction sinusoïdale suivante :

$$F(x_i) = M_i + C_i.\cos(2\pi\sigma_i' x_i);$$

où

- $M_i$ correspond au niveau moyen de la fonction ;
- $C_i$ correspond au contraste ;
- $\sigma_i'$ est le nombre d'onde en cm$^{-1}$
- i correspond à l'échelette.
- $x_i$ est la DDM

Dès lors, pour chaque échelette i, on cherche les paramètres de la fonction F ($M_i$, $C_i$ et $\sigma_i'$) tels que $F(x_i)=I(x_i)$ et cela pour les quatre interférogrammes élaborés.

Les paramètres sont par exemple obtenus par mise en oeuvre de l'algorithme des moindres carrés pour minimiser l'écart $\|F(x_i)-I(x_i)\|^2$

On retiendra que dans le cadre de cette variante préférentielle, on dispose de quatre équations pour déterminer trois inconnues. Notons qu'il est possible de représenter la fonction lentement variable par un polynôme d'ordre 1 (une pente) pour améliorer le calcul, la fonction F est alors définie par : $F(x_i)= [ M_i + C_i.\cos(2\pi\sigma_i' x_i) ] * p_i*(x_i - x_1)$. On dispose alors de quatre équations pour déterminer 4 inconnues.

Au final, pour chaque échelette i, à partir des quatre valeurs d'interférogramme ($I_1(i)$, $I_2(i)$, $I_3(i)$, $I_4(i)$), on obtient les inconnues $M_i$, $C_i$ et $\sigma_i'$.

Au cours d'une troisième étape, on détermine un coefficient de calibration pour une différence de marche en utilisant les paramètres de la fonction coïncidant avec la portion de sinusoïde correspondant à cette différence de marche.

Le coefficient de calibration correspond à une différence de marche est par exemple la moyenne de cette fonction.

Revenant à l'exemple de l'interpolation par la fonction sinusoïdale F présentée ci-dessus, le coefficient de calibration pour la différence de marche i correspond ainsi au paramètre $M_i$.

La Demanderesse a évalué l'écart entre l'interférogramme de départ Ij et l'interférogramme calculé par interpolation Icj, et cela pour chaque différence de marche $x_i$.

$$Ic1(x_i) = F(x_i = DDM_1(i)) = M_i + C_i.\cos(2\pi\sigma_i' x_i)$$

$$Ic2(x_i) = F(x_i = DDM_2(i)) = M_i + C_i.\cos(2\pi\sigma_i' x_i)$$

$$Ic3(x_i) = F(x_i = DDM_3(i)) = M_i + C_i.\cos(2\pi\sigma_i' x_i)$$

$$Ic4(x_i) = F(x_i = DDM_4(i)) = M_i + C_i.\cos(2\pi\sigma_i' x_i)$$

La Demanderesse a pu constater que le rapport signal sur bruit (le bruit correspondant à l'écart type de la différence entre interférogrammes de départ et interférogrammes calculés) est supérieur à la spécification en vigueur dans le domaine d'application de l'invention.

Des écarts de performance sont cependant notés pour les faibles différences de marche (typiquement les échelettes 1 à 67) où le contraste interférométrique est important. Ainsi en prenant en compte ces premières échelettes, on diminue d'un facteur 8 le rapport signal sur bruit de l'interférogramme. La Demanderesse a ainsi pu évaluer que le bruit sur l'échelette 67 est environ 500 fois plus important que pour l'échelette 601. Il est possible d'améliorer (lorsque cela est nécessaire) le résultat en prenant en compte une fonction d'ordre plus élevée pour la fonction TFcos[C($\sigma$)].

Les résultats sont en revanche particulièrement bons sur 95% de l'interférogramme (pour les grandes différences de marche, typiquement les échelettes 68 à 1024). Sur un interférogramme sans bruit, le procédé selon l'invention permet ainsi de connaître les variations de gain de la matrice de détection pour les échelettes 68 à 1024 avec une précision de 0.003%.

Une fois la calibration de la matrice de détection réalisée (par calcul des coefficients de calibration pour l'ensemble des échelettes), lors de l'élaboration d'un nouvel interférogramme, on vient corriger l'image de l'interférogramme acquise par la matrice de détection à l'aide desdits coefficients de calibration (plus précisément on vient corriger chacun des superpixels de la matrice correspondant à une échelette du coefficient de calibration associé à cette échelette calculé lors de la calibration).

Au cours de la première étape du procédé selon l'invention, on réalise l'acquisition d'un premier interférogramme et d'au moins deux interférogrammes décalés, chacun des interférogrammes décalés correspondant à des échantillons décalés d'une quantité donnée par rapport aux échantillons du premier interférogramme. Selon un mode de réalisation possible de l'invention, on déplace un élément mobile de l'instrument de mesure pour élaborer un interférogramme décalé.

Afin de générer une variation de signal connu pour chaque (super)pixel de la matrice de détection et élaborer ainsi un interférogramme décalé, on peut faire varier faiblement la différence de marche sur l'un des deux bras de l'interféromètre, en positionnant l'un des miroirs de l'interféromètre sur un mécanisme piézo.

Alternativement, on utilise un faible mouvement d'inclinaison (mouvement de tilt) ou un faible mouvement de translation d'une lame de verre (prismée dans le cas d'une translation), éventuellement déportée dans un bras de l'interféromètre. Cette lame de verre peut être la lame compensatrice de l'interféromètre. Ceci permet d'obtenir un mouvement très pur mécaniquement, avec un dispositif de déplacement à base de piézoélectrique.

Dans un exemple, on prévoit un instrument de mesure comprenant une matrice de détection pour acquérir une image d'un interférogramme calibrée conformément au procédé selon l'invention.

Les avantages de l'invention par rapport à l'existant sont notamment les suivants :

- Calibration pouvant être réalisée dans un instrument embarqué en vol (par exemple un interféromètre embarqué dans un satellite)
- Fiabilité accrue de la calibration
- Très bonne précision, aucun élément externe (cache noir) n'est nécessaire, et toute la chaîne instrumentale est prise en compte.
- Modulation de phase possible (pour les spectromètres acquérant une bande étroite).
- Dans le cas d'un spectromètre à Transformée de Fourier statique à échelettes, la calibration peut être réalisée directement sur la scène observée.

A ce titre, un dispositif piézoélectrique s'avère plus fiable qu'un dispositif à cache amovible qui viendrait s'intercaler alternativement sur les deux voies de l'interféromètre pour l'obturer. Un tel dispositif à cache amovible présente effectivement deux mécanismes, à priori volumineux. Par ailleurs, les caches intercalés peuvent avoir eux même des défauts s'ils ne sont pas parfaitement noirs. On notera en outre que dans l'infrarouge thermique, ces caches émettraient de la lumière, ce qui ne rendrait pas possible une calibration. Enfin, dans le cadre d'une utilisation opérationnelle, un tel dispositif à cache amovible présenterait une criticité importante et une perte de la mission en cas de panne en position obturée.

Une calibration éléments par éléments présente quant à elle l'inconvénient de ne pouvoir être réalisée qu'à l'assemblage. Ensuite, un suivi de cette calibration par un dispositif partiel (éclairant uniquement la matrice par exemple) pourrait permettre de prendre en compte une partie des évolutions. Mais ce dispositif ne permet donc pas de prendre en compte toutes les évolutions susceptibles d'arriver au cours de la vie de l'instrument (poussières se déposant en entrée de l'instrument par exemple).

Dans le cas d'une calibration sur un corps noir embarqué (ou sphère intégrante « blanche »), l'uniformité de l'éclairage est modifiée par les interférences, mais celles-ci proviennent d'une scène connue (le corps noir) et il est donc possible d'étalonner les défauts du détecteur à partir de cette scène connue à défaut d'être uniforme. Cependant, ce système est forcément présent sur une voie annexe de l'interféromètre. Il présente donc des défauts qui ne sont pas présents sur la voie de mesure de l'interféromètre (poussières...) ; à l'inverse, il ne passe pas par tous les éléments de l'interféromètre (miroir en entrée...) et ne calibre donc pas tous les défauts. Enfin, ce système nécessite de connaître parfaitement le profil spectral de la source d'éclairement, et son uniformité, qui ne peut être meilleure que quelques pourcents. Or on souhaite un étalonnage typiquement de l'ordre de 0.1 %.

## Revendications

**1.** Procédé de calibration d'une matrice de détection utilisée pour acquérir une image d'un interférogramme, comprenant les étapes selon lesquelles :

- on élabore un premier interférogramme et au moins deux interférogrammes décalés, le premier interférogramme étant élaboré en créant un nombre fini de différences de marche, et les interférogrammes décalés étant élaborés, pour chacun d'entre eux, par décalage de chacune des différences de marche du premier interférogramme, de telle sorte qu'on dispose pour chaque différence de marche d'au moins trois échantillons positionnés sur une portion de sinusoïde ;
- on détermine par interpolation pour chaque portion de sinusoïde une fonction coïncidant avec la portion de sinusoïde;
- on détermine un coefficient de calibration pour une différence de marche à partir de la fonction coïncidant avec la portion de sinusoïde correspondant à cette différence de marche.

2. Procédé selon la revendication 1, dans lequel le coefficient de calibration correspond à la moyenne de la fonction.

3. Procédé selon l'une des revendications 1 à 2, dans lequel la fonction est sinusoïdale.

4. Procédé selon l'une des revendications 1 à 2, dans lequel la fonction correspond au produit d'une fonction sinusoïdale et d'une fonction polynomiale.

5. Procédé selon l'une des revendications 1 à 3, dans lequel les au moins trois échantillons correspondent à des différences de marche régulièrement espacées.

6. Procédé selon l'une des revendications 1 à 5, dans lequel les au moins trois échantillons correspondent à des différences de marche espacées de manière à présenter un décalage total supérieur au quart d'une longueur d'onde du spectre en entrée de l'instrument élaborant les interférogrammes.

7. Procédé selon la revendication 6, dans lequel les au moins trois échantillons correspondent à des différences de marche espacées de manière à présenter un décalage total d'une longueur d'onde du spectre en entrée de l'instrument.

8. Procédé selon l'une des revendications 1 à 7, dans lequel on élabore trois interférogrammes décalés.

9. Procédé selon l'une des revendications 1 à 8, dans lequel on déplace un élément mobile de l'instrument de mesure pour élaborer un interférogramme décalé.

10. Procédé selon la revendication 9, dans lequel l'élément mobile est monté sur un mécanisme piézoélectrique.

11. Procédé selon l'une des revendications 1 à 10, dans lequel le spectre en entrée de l'instrument élaborant les interférogrammes est à bande étroite.

**Claims**

1. A method for calibrating a detection array used for acquiring an image of an interferogram, comprising the steps according to which:

   - a first interferogram and at least two shifted interferograms are elaborated, the first interferogram being elaborated by creating a finite number of optical path differences, and the shifted interferograms being elaborated for each of them, by shifting each of the optical path differences of the first interferogram, so that for each optical path difference, at least three samples are available, positioned on a sine wave portion;
   - for each sine wave portion, a function coinciding with the sine wave portion is determined by interpolation;
   - a calibration coefficient is determined for each optical path difference from the function coinciding with the sine wave portion corresponding to this optical path difference.

2. The method according to claim 1, wherein the calibration coefficient corresponds to the average of the function.

3. The method according to one of claims 1 or 2, wherein the function is sinusoidal.

4. The method according to one of claims 1 or 2, wherein the function corresponds to the product of a sinusoidal function and a polynomial function.

5. The method according to one of claims 1 to 3, wherein the at least three samples correspond to optical path differences that are regularly spaced apart.

6. The method according to one of claims 1 to 5, wherein the at least three samples correspond to optical path differences that are spaced apart so as to have a total shift greater than one-quarter of a wavelength of the spectrum at the input of the instrument elaborating the interferograms.

7. The method according to claim 6, wherein the at least three samples correspond to optical path differences that are spaced apart so as to have a total shift of one wavelength of the spectrum at the input of the instrument.

8. The method according to one of claims 1 to 7, wherein three shifted interferograms are elaborated.

9. The method according to one of claims 1 to 8, wherein for elaborating a shifted interferogram a mobile element of the measurement instrument is moved.

10. The method according to claim 9, wherein the mobile element is mounted on a piezoelectric mechanism.

11. The method according to one of claims 1 to 10, wherein the spectrum at the input of the instrument elaborating the interferograms has a narrow band.

**Patentansprüche**

1. Kalibrierverfahren für eine Detektionsmatrix, die dazu verwendet wird, ein Bild eines Interferogramms zu erfassen, und das Schritte umfasst, nach denen:

   - ein erstes Interferogramm und wenigstens zwei verschobene Interferogramme erstellt werden, wobei das erste Interferogramm erstellt wird, indem eine begrenzte Zahl Wegunterschiede erzeugt wird, und die verschobenen Interferogramme, für jedes von ihnen, durch eine Verschiebung jedes der Wegunterschiede des ersten Interferogramms erstellt werden, und dies derart, dass für jeden Wegunterschied wenigstens drei Abtastwerte vorhanden sind, die auf einem Abschnitt einer Sinuskurve angeordnet sind;
   - für jeden Sinuskurvenabschnitt durch Interpolation eine Funktion bestimmt wird, die mit dem Sinuskurvenabschnitt zusammenfällt;
   - ausgehend von der Funktion, die mit dem Sinuskurvenabschnitt zusammenfällt, und für einen Wegunterschied ein Kalibrierungskoeffizient bestimmt wird, der zu diesem Wegunterschied gehört.

2. Verfahren nach Anspruch 1, bei dem der Kalibrierungskoeffizient dem Mittelwert der Funktion entspricht.

3. Verfahren nach einem der Ansprüche 1 bis 2, bei dem die Funktion sinusförmig ist.

4. Verfahren nach einem der Ansprüche 1 bis 2, bei dem die Funktion dem Produkt einer sinusförmigen Funktion und einer polynomialen Funktion entspricht.

5. Verfahren nach einem der Ansprüche 1 bis 3, bei dem die wenigstens drei Abtastwerte Wegunterschieden entsprechen, die regelmäßige Abstände haben.

6. Verfahren nach einem der Ansprüche 1 bis 5, bei dem die wenigstens drei Abtastwerte Wegunterschieden entsprechen, die solche Abstände haben, dass sie eine Gesamtverschiebung repräsentieren, die größer als eine viertel Wellenlänge des Spektrums am Eingang des Instruments ist, das die Interferogramme erstellt.

7. Verfahren nach Anspruch 6, bei dem die wenigstens drei Abtastwerte Wegunterschieden entsprechen, die solche Abstände haben, dass sie eine Gesamtverschiebung von einer Wellenlänge des Spektrums am Eingang des Instruments repräsentieren.

8. Verfahren nach einem der Ansprüche 1 bis 7, bei dem drei verschobene Interferogramme erstellt werden.

9. Verfahren nach einem der Ansprüche 1 bis 8, bei dem ein bewegliches Element des Messinstruments versetzt wird, um ein verschobenes Interferogramm zu erstellen.

10. Verfahren nach Anspruch 9, bei dem das bewegliche Element auf einem piezoelektrischen Mechanismus montiert ist.

11. Verfahren nach einem der Ansprüche 1 bis 10, bei dem das Spektrum am Eingang des Instruments, das die Interferogramme erstellt, schmalbandig ist.

# FIG. 1

DDM$_1$(i)    DDM$_3$(i)              DDM$_1$(i+k)    DDM$_3$(i+k)

DDM$_2$(i)    DDM$_4$(i)              DDM$_2$(i+k)    DDM$_4$(i+k)          DDM

k x 80μm

EP 2 189 750 B1

## RÉFÉRENCES CITÉES DANS LA DESCRIPTION

**Documents brevets cités dans la description**

• US 5675512 A

**Littérature non-brevet citée dans la description**

• **J. SCHMIT ; K. CREATH.** Extended averaging technique for derivation of error-compensating algorithms in phase-shifting interferometry. *Applied Optics,* 1995, vol. 34 (19